# EUROPEAN PATENT APPLICATION

(11) **EP 4 645 855 A1**
(43) Date of publication of application: **05.11.2025**
(21) Application number: 23910426.8
(22) Date of filing: 22.12.2023
(51) Int. Cl.: H04N 19/124

(54) **QUANTIZATION PARAMETER ADJUSTMENT METHOD, APPARATUS AND DEVICE, AND STORAGE MEDIUM**

(30) Priority: 30.12.2022 CN 202211741038
(71) Applicant: Hangzhou Hikvision Digital Technology Co., Ltd., Hangzhou, Zhejiang 310051 (CN)
(72) Inventor: SUN, Yucheng, Hangzhou, Zhejiang 310051 (CN); WANG, Yan, Hangzhou, Zhejiang 310051 (CN); CHEN, Fangdong, Hangzhou, Zhejiang 310051 (CN); WANG, Li, Hangzhou, Zhejiang 310051 (CN)
(74) Representative: Epping - Hermann - Fischer
(86) International application number: PCT/CN2023/141199
(87) International publication number: WO 2024/140500

(57) **Abstract**

The present application belongs to the technical field of image coding, and discloses a quantization parameter adjustment method, apparatus and device, and a storage medium. The quantization parameter adjustment method comprises: determining visual complexity information and/or coding complexity information corresponding to the current coding block, wherein the current coding block is an image coding block currently undergoing coding processing; determining quantization parameters of the current coding block according to the visual complexity information and/or the coding complexity information; and adjusting the quantization parameters of the current coding block.

## Description

### Related Applications

The present application claims the priority to a Chinese patent application 202211741038.5 filed with the China National Intellectual Property Administration (CNIPA) on December 30, 2022, which is incorporated herein by reference in its entirety.

### Technical Field

The present application relates to the technical field of image encoding, in particular to a quantization parameter adjustment method, apparatus, device and storage medium.

### Background

During the encoding process involving shallow encoding of image data, existing encoding technology will give a small quantization parameter for a visually simple region and a large quantization parameter for a visually complex region.

However, when the code stream buffer is tight (full), the quantization parameter is generally increased to reduce a risk of code stream buffer overflow. However, if a visually simple and simply encoded block (such as a completely flat block) needs to be encoded at this time, or a visually complex but simply encoded block (such as an Intra Block Copy, IBC block) needs to be encoded at this time, excessive rate control intervention may occur, leading to subjective quality loss.

Moreover, if an encoding block contains both a visually simple region as well as a visually complex region, the visually simple region therein is often compromised by using a large quantization parameter due to the presence of the visually complex region, resulting in subjective quality loss.

The above contents are only used to assist in understanding technical solutions of the present application, and do not imply that the above contents are prior art.

### Summary

The main object of the present application is to provide a quantization parameter adjustment method, apparatus, device and storage medium, aiming to solve the technical problem that existing technology cannot dynamically adjust quantization parameters based on the content of encoding blocks, which can easily lead to subjective quality loss.

In order to achieve the above object, the present application provides a quantization parameter adjustment method, including:
determining visual complexity information and/or encoding complexity information corresponding to a current encoding block, wherein the current encoding block is an image encoding block currently undergoing encoding processing;
determining a quantization parameter of the current encoding block based on the visual complexity information and/or the encoding complexity information; and
adjusting the quantization parameter of the current encoding block.

In order to achieve the above object, the present application provides a quantization parameter adjustment method, including:
determining encoding complexity information corresponding to a current encoding block, wherein the current encoding block is an image encoding block currently undergoing encoding processing;
determining a quantization parameter of the current encoding block based on the encoding complexity information;
determining a measurement value of a target sample in the current encoding block; and
adjusting the quantization parameter of the current encoding block based on the measurement value.

In order to achieve the above object, the present application provides a quantization parameter adjustment apparatus, including:
an information acquisition module, configured for determining encoding complexity information corresponding to a current encoding block, wherein the current encoding block is an image encoding block currently undergoing encoding processing;
a parameter determination module, configured for determining a quantization parameter of the current encoding block based on the encoding complexity information; and
a parameter adjustment module, configured for adjusting the quantization parameter of the current encoding block.

In order to achieve the above object, the present application provides a quantization parameter adjustment apparatus, including:
an information acquisition module, configured for determining encoding complexity information corresponding to a current encoding block, wherein the current encoding block is an image encoding block currently undergoing encoding processing;
a parameter determination module, configured for determining a quantization parameter of the current encoding block based on the encoding complexity information; and
a parameter adjusting module, configured for determining a measurement value of a target sample in the current encoding block, and adjusting the quantization parameter of the current encoding block based on the measurement value.

In addition, in order to achieve the above object, the present application also provides a quantization parameter adjustment device, which includes a memory, a processor, and a quantization parameter adjustment program stored in the memory and configured to run on the processor, and the quantization parameter adjustment program is configured to implement the quantization parameter adjustment method as described above.

In addition, in order to achieve the above object, the present application also provides an encoding device, which includes a memory, a processor and an encoding program stored in the memory and configured to run on the processor, and the encoding program is configured to implement the quantization parameter adjustment method as described above.

In addition, in order to achieve the above object, the present application also provides a decoding device, which includes a memory, a processor and a decoding program stored in the memory and configured to run on the processor, and the decoding program is configured to implement the quantization parameter adjustment method as described above.

In addition, in order to achieve the above object, the present application also provides a storage medium having a quantization parameter adjustment program stored therein, which, when executed by a processor, cause the processor to implement the quantization parameter adjustment method as described above.

In the present application, visual complexity information and/or encoding complexity information corresponding to the current encoding block is determined, wherein the current encoding block is an image encoding block currently undergoing encoding processing; the quantization parameter of the current encoding block is determined according to the visual complexity information and/or the encoding complexity information; and the quantization parameter of the current encoding block is adjusted. Because the quantization parameter of the current encoding block can be determined based on the visual complexity information and/or encoding complexity information of the current encoding block, and the quantization parameter of the current encoding block can be adjusted, it is ensured that the quantization parameter can be dynamically adjusted as the content of the current encoding block is encoded, thus avoiding the subjective quality loss.

### Brief Description of the Drawings

Fig. 1 is a schematic diagram of a structure of an electronic device in a hardware operating environment according to an embodiment of the present application;
Fig. 2 is a schematic flowchart of a first embodiment of a quantization parameter adjustment method of the present application;
Fig. 3 is a schematic diagram of an execution flow of a shallow encoding framework according to an embodiment of the present application;
Fig. 4 is a schematic flowchart of a second embodiment of the quantization parameter adjustment method of the present application;
Fig. 5 is a schematic flowchart of a third embodiment of the quantization parameter adjustment method of the present application;
Fig. 6 is a schematic flowchart of a fourth embodiment of the quantization parameter adjustment method of the present application;
Fig. 7 is a schematic diagram of sub-block division according to an embodiment of the present application;
Fig. 8 is a schematic diagram showing positions of reconstructed samples in a vertical prediction mode according to an embodiment of the present application;
Fig. 9 is a schematic diagram showing positions of reconstructed samples in a horizontal prediction mode according to an embodiment of the present application;
Fig. 10 is a schematic diagram showing positions of reconstructed samples in a top-left to bottom-right prediction mode according to an embodiment of the present application;
Fig. 11 is a schematic diagram showing positions of reconstructed samples in a top-right to bottom-left prediction mode according to an embodiment of the present application;
Fig. 12 is a schematic flowchart of a fifth embodiment of the quantization parameter adjustment method of the present application;
Fig. 13 is a schematic flowchart of a sixth embodiment of the quantization parameter adjustment method of the present application;
Fig. 14 is a structural block diagram of a first embodiment of a quantization parameter adjustment apparatus of the present application.

The realization of the objects, functional characteristics and advantages of the present application will be further explained in combination with the embodiments and with reference to the accompanying drawings.

### Detailed Description

It should be understood that the specific embodiments described herein are only used for explaining the present application, and are not intended to limit the present application.

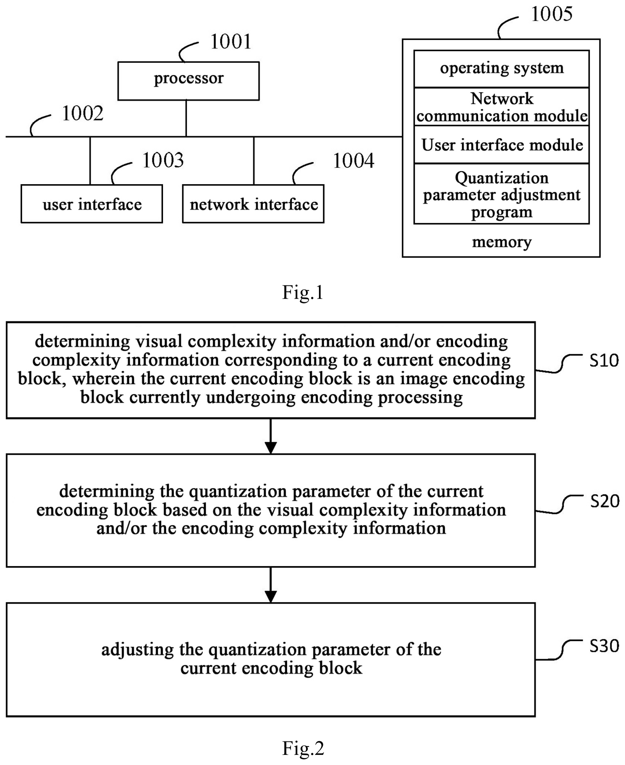

Referring to Fig. 1, Fig. 1 is a schematic diagram of a structure of a quantization parameter adjustment device in a hardware operating environment according to an embodiment of the present application.

As shown in Fig. 1, the electronic device may include: a processor 1001, such as a Central Processing Unit (CPU), a communication bus 1002, a user interface 1003, a network interface 1004, and a memory 1005. The communication bus 1002 is used to realize the connection and communication among these components. The user interface 1003 may include a display screen (Display) and an input unit such as a keyboard, and the user interface 1003 may further include a standard wired interface and a wireless interface. The network interface 1004 may include a standard wired interface and a wireless interface (such as a Wireless-Fidelity (WI-FI) interface). The memory 1005 may be a high-speed Random Access Memory (RAM) or a stable Non-Volatile Memory (NVM), such as a disk memory. The memory 1005 may also be a storage device independent of the aforementioned processor 1001.

It can be understood by those skilled in the art that the structure shown in Fig. 1 does not limit the electronic device, and may include more or fewer components than shown in the figure, or combine certain components, or arrange the components differently.

As shown in Fig. 1, the memory 1005 as a storage medium may include an operating system, a network communication module, a user interface module and a quantization parameter adjustment program.

In the electronic device shown in Fig. 1, the network interface 1004 is mainly used for data communication with a network server; the user interface 1003 is mainly used for data interaction with a user; the processor 1001 and the memory 1005 in the electronic device of the present application can be provided in the quantization parameter adjustment device, and the electronic device calls the quantization parameter adjustment program stored in the memory 1005 through the processor 1001 and executes the quantization parameter adjustment method provided by embodiments of the present application.

An embodiment of the present application provides a quantization parameter adjustment method, with reference to FIG. 2, which shows a schematic flowchart of a first embodiment of a quantization parameter adjustment method of the present application.

In the present embodiment, the quantization parameter adjustment method includes the following steps:
Step S10: determining visual complexity information and/or encoding complexity information corresponding to a current encoding block, wherein the current encoding block is an image encoding block currently undergoing encoding processing.

It should be noted that an execution subject of the present embodiment can be the quantization parameter adjustment device, or an encoding device or a decoding device when encoding image data. The quantization parameter adjustment device can be an electronic device such as a personal computer, a server, and of course, it can also be other devices that can achieve the same or similar functions, which is not limited in the present embodiment. In the present embodiment and the following embodiments, the quantization parameter adjustment method of the present application will be explained by taking the execution subject being the quantization parameter adjustment device as an example.

It should be noted that when shallow encoding is performed on the image data, a shallow encoding framework generally has modules including block division, rate control, prediction, transformation, quantization, entropy coding, etc. Wherein, the block division module will divide the image data into image encoding blocks, and then the divided image encoding blocks are sequentially subjected to an encoding process. The current encoding block can be an image encoding block currently undergoing encoding processing.

Visual complexity information can be a degree of sensitivity of human eyes to the current encoding block region. The human eyes are often less sensitive to complex regions and more sensitive to simple regions. Encoding complexity information can be the cost required to encode the current encoding block. Often, visually complex blocks will cost more because they are difficult to predict, while visually simple blocks will cost less because they are easy to predict. Therefore, in some applications of the present application, the encoding complexity information may be made equal to the visual complexity information to simplify the operation, because visually simple regions are often easy to encode.

However, in special cases, a visually simple block may also cause a large encoding cost due to such as a lack of prediction mode or a mismatch of coefficient coding algorithms, etc. At this time, it is no longer necessary to directly equate the encoding complexity information with the visual complexity information. Instead, the encoding complexity analysis can be performed separately to calculate the encoding complexity information.

In a possible embodiment of the present application, the quantization parameter adjustment device may be an encoding end that performs shallow encoding on the image data, at this time, determining visual complexity information and/or encoding complexity information corresponding to the current encoding block may include: calculating the visual complexity based on a texture complexity to obtain the visual complexity information, calculating the encoding complexity of the current encoding block based on a precoding mode to obtain the encoding complexity information, and encoding the visual complexity information and the encoding complexity information into the code stream.

Of course, the quantization parameter adjustment device can also be a decoding end that performs shallow encoding on the image data. Since the encoding end will calculate the visual complexity information and/or the encoding complexity information in advance and encode the visual complexity information and/or the encoding complexity information into the code stream, determining the visual complexity information and/or the encoding complexity information corresponding to the current encoding block at this time can include: reading the visual complexity information and/or the encoding complexity information corresponding to the current encoding block from the code stream. Of course, if necessary, the visual complexity information can also be derived from the reconstructed pixels around the current encoding block.

Step S20: determining a quantization parameter of the current encoding block based on the visual complexity information and/or the encoding complexity information.

It should be noted that determining the quantization parameter of the current encoding block based on the visual complexity information and/or the encoding complexity information can include: directly obtaining the quantization parameter of the current encoding block based on at least one of the visual complexity information and the encoding complexity information. For example, if the visual complexity information corresponds to the simplest vision, a value of the quantization parameter of the current encoding block is directly derived as BitDepth-7, where BitDepth is the bit depth of the encoding channel.

Of course, when determining the quantization parameter, it can be adjusted according to the actual quantization design. For example, assuming that the quantization design adopts 8-point fractional quantization, if the visual complexity information corresponds to the simplest vision, the value of the quantization parameter of the current encoding block is (BitDepth-7)*8.

Step S30: adjusting the quantization parameter of the current encoding block.

It should be noted that after obtaining the quantization parameter of the current encoding block, in order to avoid the subjective quality loss as much as possible, the quantization parameter of the current encoding block can be adjusted.

In practice, the quantization parameter of the current encoding block can be adjusted in a variety of different ways, such as adjusting the quantization parameter according to a preset parameter threshold, making different adjustments based on different visual complexity information and/or encoding complexity information, adjusting the quantization parameter according to a position of the current encoding block in a process of encoding, and adjusting the quantization parameter according to surrounding samples.

In a possible implementation of the present application, a manager of the quantization parameter adjustment device can set local indication information in advance, and specify a region in the current encoding block where the quantization parameter needs to be adjusted based on the local indication information, and then at this time, step S30 in the present embodiment may include:
adjusting quantization parameters of all regions in the current encoding block; or,
adjusting a quantization parameter of a preset region in the current encoding block; or,
not adjusting any of the quantization parameters of all regions in the current encoding block.

In practice, the manager of the quantization parameter adjustment apparatus can set the local indication information in advance. If the local indication information indicates that all are to be adjusted, the quantization parameters of all regions in the current encoding block may be adjusted. If the local indication information indicates that no adjustment is to be made, then the quantization parameters of all regions in the current encoding block may not be adjusted.

If a preset region is specified in the local indication information, only the quantization parameter of the preset region in the current encoding block may be adjusted at this time. For example, after knowing a position of a visually simple region of the current encoding block, the manager of the quantization parameter adjustment apparatus can take the visually simple region as a preset region and set local indication information based on the position of the visually simple region, at this time, the quantization parameter adjustment device will only adjust a quantization parameter of the visually simple region in the current encoding block.

In a possible implementation of the present application, it can be set that the quantization parameter of the current encoding block is specially processed when the current encoding block is at a specific position, then the step S30 in the present embodiment may include:
if the current encoding block is at a preset designated position, reducing or increasing the quantization parameter of the current encoding block.

It should be noted that the preset designated position can be set in advance by the manager of the quantization parameter adjustment device, and the extent for reducing or increasing the quantization parameter can also be set in advance by the manager of the quantization parameter adjustment device.

For example, if the current encoding block is located at a first row of a slice, the quantization parameter of the current encoding block is reduced or increased by *para1;* if the current encoding block is located at a first column of the slice, the quantization parameter of the current encoding block is reduced or increased by *para2,* wherein both *para1* and *para2* are preset values pre-set by the manager of the quantization parameter adjustment device.

In a possible implementation of the present application, it may also be set that the quantization parameter of the current encoding block is not adjusted when the current encoding block is at a specific position, then the step S30 in the present embodiment may include:
if the current encoding block is at a preset designated position, the quantization parameter of the current encoding block is not adjusted.

For example, if the current encoding block is located at a first row of a slice, the quantization parameter of the current encoding block is not adjusted; if the current encoding block is located at a first column of the slice, the quantization parameter of the current encoding block is not adjusted.

In a possible implementation of the present application, in order to ensure that quantization parameters of other subsequent encoding blocks can also be reasonably adjusted, after step S30 in the present embodiment, it may further include:
updating a rate control parameter based on the adjusted quantization parameter, wherein the rate control parameter is used for calculating the quantization parameter of the encoding block.

It should be noted that updating the rate control parameter according to the adjusted quantization parameter may include: detecting whether the adjusted quantization parameter is within a preset range, and if yes, a rate control module in a shallow encoding framework is called to update the rate control parameter. Wherein, the rate control parameter is used to calculate the quantization parameter of the encoding block. If the rate control parameter is updated, a calculation basis for calculating the quantization parameter of the encoding block will also be updated.

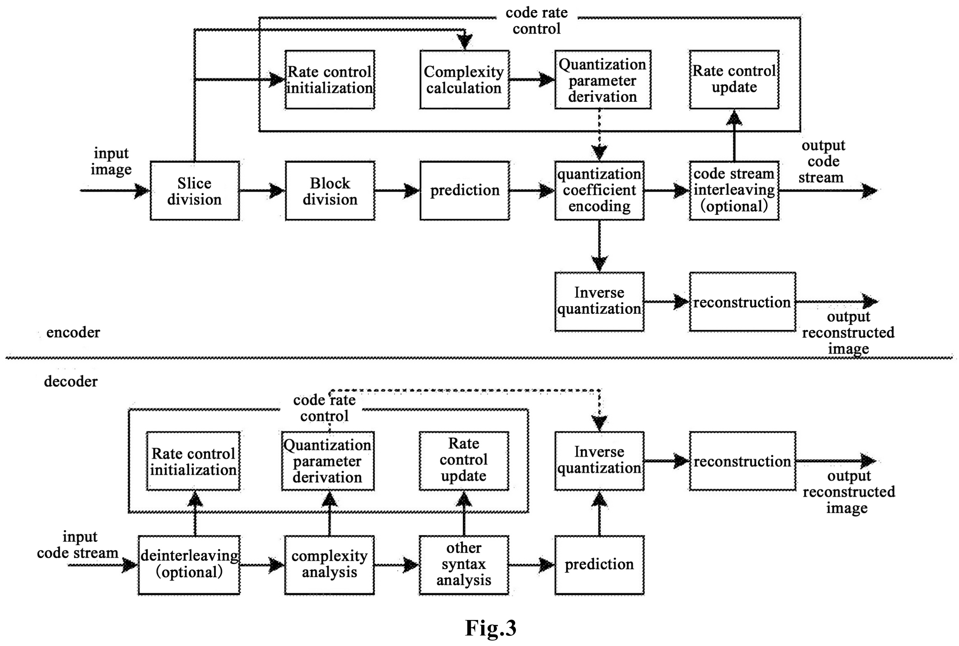

For the convenience of understanding, the present solution is illustrated in conjunction with FIG. 3 without limiting. Fig. 3 is a schematic diagram of an execution flow of a shallow encoding framework of the present embodiment. As shown in Fig. 3, the shallow encoding framework includes an encoder and a decoder, wherein the encoder includes a division module (slice division and block division), a prediction module, a quantization coefficient encoding module, a code stream interleaving module and other modules; the decoder includes a deinterleaving module, a complexity analysis module, other syntax analysis modules, a prediction module, an inverse quantization module, a reconstruction module, and the like, wherein the rate control module in the encoder or the decoder can be configured for executing the quantization parameter adjustment method in the embodiment of the present application.

A prediction pixel (Prediction Signal) refers to a pixel value derived from pixels that have been encoded or decoded, and a residual is obtained by a difference between the original pixel and the prediction pixel, and then the transformation quantization and coefficient encoding are carried out on the residual. In particular, an inter-frame predicted pixel refers to a pixel value of the current block derived from a reference frame (a reconstructed pixel frame). Because positions of the pixels are discrete, it is necessary to obtain a final predicted pixel through an interpolation operation. The closer the predicted pixel is to the original pixel, the smaller the residual energy obtained by subtracting the two, and the higher the encoding compression performance.

There are two major indicators to evaluate encoding efficiency: code rate and Peak Signal to Noise Ratio (PSNR). The smaller the bit stream, the larger the compression ratio; the larger the PSNR, the better the quality of the reconstructed image. When selecting a mode, a discriminant formula is essentially a comprehensive evaluation of the two. A corresponding cost of a mode: j (mode) = D+λ*R. Where d refers to Distortion, which is usually measured by an indicator, i.e., Sum of the Squared Errors (SSE), and SSE refers to a mean square sum of differences between the reconstructed block and the source image; λ is the Lagrange multiplier; R is the actual number of bits required for encoding the image block in this mode, including the sum of bits required for encoding mode information, motion information and residuals, etc. When selecting a mode, if Remote Data Object (RDO) principle is used to make a comparative decision on the encoding modes, the best encoding performance can usually be guaranteed. Intra Prediction refers to predictive encoding by using reconstructed pixel values of spatially adjacent blocks of the current block (in the same frame image as the current block). Rate Control refers to controlling the stability of code rate, which is generally achieved by adjusting the quantization step size.

In the shallow compression scene, there is a code stream buffer for storing the bits of each coding unit. In a fixed bit rate control scene, after encoding each rate control unit, the code stream buffer will put the bits of this rate control unit into the code stream buffer, and at the same time remove a certain number of bits from the code stream buffer. The purpose of shallow compression of the rate control is to make the code stream buffer not overflow and not underflow. Overflow means that the code stream buffer is full but there are still bits not put into the buffer, and underflow means that there are no bits in the code stream buffer but the number of bits removed does not reach the required number.

Fallback Mode is mainly to ensure that the code stream buffer does not overflow, and the number of bits encoded using this mode must be less than or equal to the fixed number of bits that needs to be removed from the code stream buffer. After encoding/decoding in fallback mode, the "water level" of the code stream buffer will not rise, so that the overflow will not occur.

Entropy coding refers to a lossless encoding method based on the principle of information entropy. It is in the last processing module of video compression, which transforms a series of element symbols used to represent the video sequence into a binary code stream for transmission or storage. Output data of an entropy coding module is a final code stream after the original video is compressed. The entropy coding can effectively remove the statistical redundancy of these video element symbols and is one of the important tools to ensure the efficiency of video encoding and compression.

In the present embodiment, through determining visual complexity information and/or encoding complexity information corresponding to the current encoding block, wherein the current encoding block is an image encoding block currently undergoing encoding processing; determining the quantization parameter of the current encoding block according to the visual complexity information and/or the encoding complexity information; and adjusting the quantization parameter of the current encoding block. Because the quantization parameter of the current encoding block can be determined based on the visual complexity information and/or encoding complexity information of the current encoding block, and the quantization parameter of the current encoding block can be adjusted, it is ensured that the quantization parameter can be dynamically adjusted as the content of the current encoding block is encoded, thus avoiding the subjective quality loss.

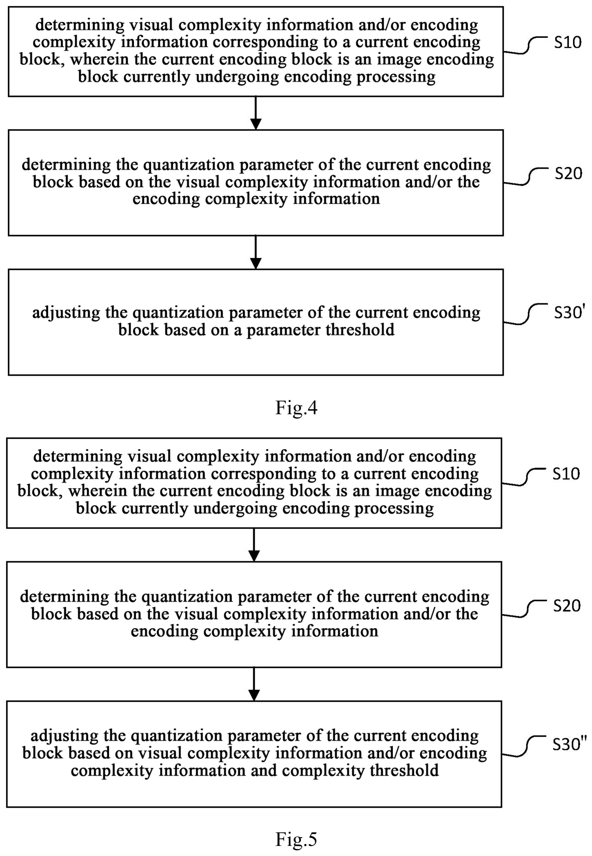

Referring to Fig. 4, Fig. 4 is a schematic flowchart of a second embodiment of the quantization parameter adjustment method.

Based on the above first embodiment, the step S30 of the quantization parameter adjustment method of the present embodiment includes:
Step S30': adjusting the quantization parameter of the current encoding block based on a parameter threshold.

It should be noted that the parameter threshold can be a preset fixed threshold or a value read from a high-level syntax, wherein the high-level syntax can at least include a sequence level, an image level or a slice level. Adjusting the quantization parameter of the current encoding block based on the parameter threshold may include: comparing the quantization parameter of the current encoding block with the parameter threshold, and adjusting the quantization parameter of the current encoding block based on a result of the comparison.

In practice, the inverse quantization parameter adjustment can be performed only when the quantization parameter of the current encoding block is within a certain range, at this time, a first parameter threshold and a second parameter threshold can be set in advance according to the range (the first parameter threshold is less than the second parameter threshold). If the quantization parameter of the current encoding block is less than the first parameter threshold or greater than the second parameter threshold, it means that the quantization parameter of the current encoding block is not within the range, and the quantization parameter of the current encoding block may not be adjusted.

If the quantization parameter of the current encoding block is greater than the first parameter threshold and less than the second parameter threshold, the quantization parameter of the current encoding block can be adjusted to a preset quantization parameter at this time. Wherein, the preset quantization parameter may be a fixed value set in advance by the manager of the quantization parameter adjustment device.

Of course, in order to adjust the quantization parameter in a more reasonable manner, a third parameter threshold can be set, and the first parameter threshold is smaller than the third parameter threshold, the third parameter threshold is smaller than the second parameter threshold. After determining that the quantization parameter of the current encoding block is greater than the first parameter threshold and less than the second parameter threshold, the quantization parameter of the current encoding block can be compared with the third parameter threshold. If the quantization parameter of the current encoding block is less than the third parameter threshold, the quantization parameter can be directly set to the third parameter threshold or the quantization parameter can be reduced. The reduction range when reducing the quantization parameter can be set in advance by the manager of the quantization parameter adjustment device.

In the present embodiment, by comparing the preset parameter threshold with the quantization parameter of the current encoding block, an interval where the quantization parameter of the current encoding block is located is determined, and then the quantization parameter of the current encoding block is adjusted based on the interval, which ensures a degree of freedom and rationality in the process of adjusting the quantization parameter.

Referring to Fig. 5, Fig. 5 is a schematic flowchart of a third embodiment of the quantization parameter adjustment method.

Based on the first embodiment, the step S30 of the quantization parameter adjustment method of the present embodiment includes:
Step S30": adjusting the quantization parameter of the current encoding block based on visual complexity information and/or encoding complexity information and a complexity threshold.

It should be noted that the complexity threshold can be a fixed threshold set in advance or a value read from a high-level syntax, wherein the high-level syntax can at least include a sequence level, an image level or a slice level.

In practice, when the visual complexity information or encoding complexity information is too small, it is not necessary to adjust the quantization parameter of the current encoding block. A first complexity threshold can be set at this time, and if the visual complexity information or the encoding complexity information is less than the first complexity threshold, the quantization parameter of the current encoding block may not be adjusted.

For example, suppose that the first complexity threshold is *para1,* the visual complexity information is A1, and the encoding complexity information is A2. At this time, if either A1 or A2 is equal to 0 or less than *para1,* it means that the region of the current encoding block is the simplest visual region at this time, and the quantization parameter of the current encoding block may not be adjusted at this time.

Of course, if the current encoding block is an image encoding block with simple vision but complex encoding, at this time, a transition protection will increase the risk of overflow in the code stream buffer during the encoding process, the quantization parameter of the current encoding block may not be adjusted at this time. At this time, a second complexity threshold and a third complexity threshold can be set in advance (the second complexity threshold is less than the third complexity threshold). If the visual complexity information of the current encoding block is less than the second complexity threshold, and the encoding complexity information is greater than the third complexity threshold, it means that the current encoding block is an image encoding block with simple vision but complex encoding, and the quantization parameter of the current encoding block may not be adjusted at this time. Since this adjustment method is mainly used to avoid the risk of overflow in the code stream buffer, it can only be used when the fullness of the code stream buffer is high.

In a possible implementation of the present application, it can be set that when the visual complexity information is a specific value, a special adjustment method is adopted to adjust the quantization parameter, and at this time, a fourth complexity threshold can be set, and if the visual complexity information is equal to the fourth complexity threshold, the quantization parameter of the current encoding block can be reduced. For example, if the visual complexity information is equal to 1, the quantization parameter is reduced by *para2,* where *para2* is a preset reduction value, which can be set in advance by the manager of the quantization parameter adjustment device.

In a possible implementation of the present application, it can also be set that when the current encoding block is visually complex and the coding is complex, the quantization step size can be appropriately increased (i.e., the quantization parameter is appropriately increased), then a fifth complexity threshold and a sixth complexity threshold can be set in advance at this time. If the visual complexity information is greater than the fifth complexity threshold and the encoding complexity information is greater than the sixth complexity threshold, it means that the current encoding block is an image encoding block with complex vision and complex encoding. At this time, the quantization parameter of the current encoding block can be increased, wherein the increase range of the quantization parameter can be set in advance by the manager of the quantization parameter adjustment device, and the fourth complexity threshold is less than the fifth complexity threshold.

In a possible implementation of the present application, it can also be set that the quantization step size is appropriately reduced when the current encoding block is simple in vision and encoding, and then a seventh complexity threshold and an eighth complexity threshold can be set in advance at this time. If the visual complexity information is less than the seventh complexity threshold and the encoding complexity information is less than the eighth complexity threshold, it means that the current encoding block is an image encoding block with simple vision and coding. At this time, the quantization parameter of the current encoding block can be reduced, wherein the reduction range of the quantization parameter can be set in advance by the manager of the quantization parameter adjustment device, and the fourth complexity threshold is greater than the seventh complexity threshold, the fifth complexity threshold is greater than the seventh complexity threshold, and the sixth complexity threshold is greater than the eighth complexity threshold.

In the present embodiment, the quantization parameter of the current encoding block is adjusted based on the visual complexity information and/or the encoding complexity information and the complexity threshold. Because the quantization parameter of the current encoding block is adjusted based on the visual complexity information and/or encoding complexity information and the complexity threshold, it is ensured that many different adjustment methods can be set when the quantization parameter is adjusted, which enriches the adjustment mechanism of the quantization parameters and makes it more in line with the adjustment requirements in practice.

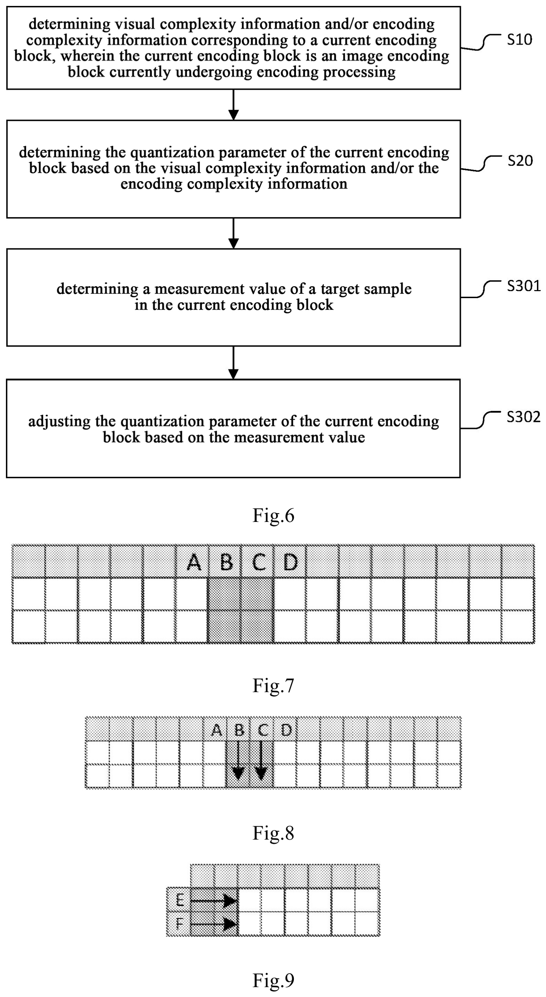

Referring to fig. 6, fig. 6 is a schematic flowchart of a fourth embodiment of the quantization parameter adjustment method.

Based on the above first embodiment, the step S30 of the quantization parameter adjustment method of the present embodiment includes:
Step S301: determining a measurement value of a target sample in the current encoding block.

It should be noted that a measurement value such as a gradient value, a variance, an absolute value between a maximum value and a minimum value can be used, and of course, other similar measurement values can also be used, which is not limited in the present embodiment. In the present embodiment, the gradient value is used as the measurement value for illustration. The target sample may be a sample in the current encoding block that is specified to be subject to quantization parameter adjustment.

In a possible implementation of the present application, the current encoding block may be divided into a plurality of samples in a sub-block division manner, and at this time, before step S301 in the present embodiment, it may further include:
performing a sub-block division on the current encoding block, and dividing the current encoding block into a plurality of samples based on a sub-block division result.

It should be noted that performing the sub-block division on the current encoding block may include: performing a 2x2 specification of sub-block division on the current encoding block, and the current encoding block is divided into a plurality of sub-blocks, and then a portion in the current encoding block belonging to a same sub-block is taken as a sample, thus the current encoding block is divided into a plurality of samples. Wherein, samples belonging to the same sub-block share a measurement value, that is, samples belonging to the same sub-block have the same measurement value. Of course, other specifications (such as 3x3 specification) of sub-block division method can also be used, and the present embodiment does not limit to this.

For the convenience of understanding, the present solution is illustrated in conjunction with Fig. 7 without limiting. Fig. 7 is a schematic diagram of sub-block division in the present embodiment. As shown in Fig. 7, the current encoding block is divided into a plurality of sub-blocks, and thus divided into a plurality of samples. For the sample (BC) formed by 2x2 sub-blocks, a gradient value can be calculated by using its surrounding reconstructed samples as a measurement value, and its gradient value is grad₂ₓ₂= (grad_{B}+grad_{C}) /2, where grad_{B}= (abs (A-B) +abs (B-C) ) /2, grad_{C}= (abs (B-C) +abs (C-D) ) /2. Where abs is the absolute value function.

In a possible implementation of the present application, the measurement value of the target sample in the current encoding block may be calculated using reconstructed samples around the current encoding block, and then the step S301 in the present embodiment may include:
calculating the measurement value of the target sample in the current encoding block based on the reconstructed samples around the current encoding block.

In practice, when calculating the measurement value, since different prediction modes are used for pixel reconstruction during encoding, the positions of the reconstructed samples around the current encoding block may be different. In order to ensure the rationality of the calculated measurement value, calculating the measurement value of the target sample in the current encoding block based on the reconstructed samples around the current encoding block described in the present embodiment may include:
determining positions of the reconstructed samples corresponding to the target sample in the current encoding block based on a prediction mode of the target sample;
determining the measurement value of the target sample in the current encoding block based on the positions of the reconstructed samples.

It should be noted that one or more different prediction modes may be applied in a same current encoding block at the same time (for example, the prediction mode of each of the sub-blocks of the current encoding block may be different), for a sample, it is possible to select positions of surrounding reconstructed samples based on the prediction mode to which the sample belongs. Determining positions of reconstructed samples corresponding to a sample based on a prediction mode of the sample may include: determining positions of the reconstructed samples around the sample based on the prediction method of the prediction mode used by the sample.

After the positions of the reconstructed samples corresponding to the target sample in the current encoding block are determined according to the prediction mode of the target sample, a measurement value of the target sample in the current encoding block can be calculated according to the reconstructed samples.

For the convenience of understanding, the present solution is illustrated in conjunction with Figs. 8 and 9 without limiting. Figs. 8 and 9 are schematic diagrams showing positions of reconstructed samples in a vertical prediction mode and a horizontal prediction mode of the present embodiment.

If the prediction mode is a vertical prediction mode, and its prediction direction is shown by the arrow in Fig. 8, for a sample constructed by 2x2 sub-blocks (the 2x2 sub-blocks with heavy shaded portion in the figure), at this time, a gradient value can be used as a measurement value, the sample has a gradient value grad2x2=abs (B-C) . If the prediction mode is a horizontal prediction mode, its prediction direction is shown by the arrow in Fig. 9, and the sample constructed by 2x2 sub-blocks (the 2x2 sub-blocks with heavy shaded portion in the figure) has a gradient value grad2x2=abs (E-F) .

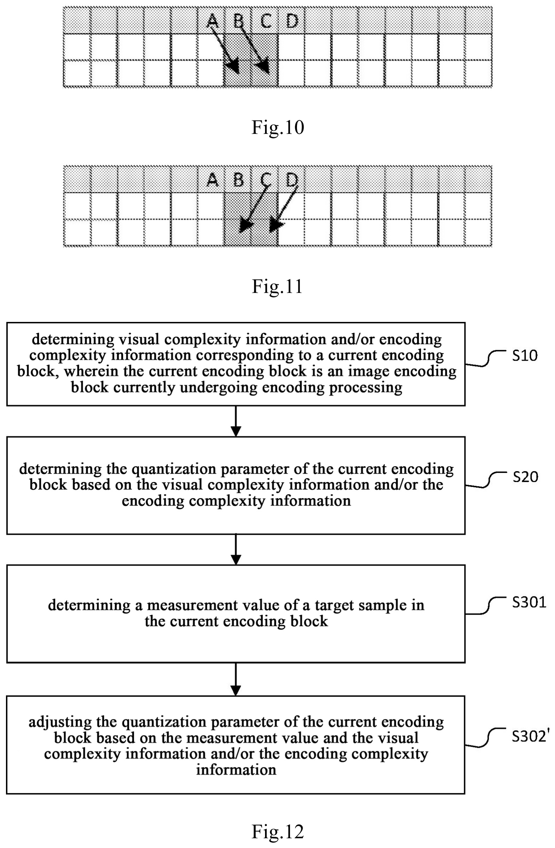

Similarly, there will be other prediction modes. If a prediction mode from the top left to the bottom right is used, and its prediction direction is shown by the arrow in Fig. 10. At this time, the sample constructed by 2x2 sub-blocks (the 2x2 sub-blocks with heavy shaded portion in the figure) has a gradient value grad2x2=abs (A-B) , or grad2x2= (abs (A-B) +abs (B-C) ) /2, or grad2x2= (abs (A-B) +3*abs (B-C) ) /4.

If a prediction mode from the top right to the bottom left is used, its prediction direction is shown by the arrow in Fig. 11. At this time, the sample constructed by 2x2 sub-blocks (the 2x2 sub-blocks with heavy shaded portion in the figure) has a gradient value grad2x2=abs (C-D) , or grad2x2= (abs (C-D) +abs (B-C) ) /2, or grad2x2= (3*abs (C-D) +abs (B-C) ) /4.

Step S302: adjusting the quantization parameter of the current encoding block based on the measurement value.

It should be noted that adjusting the quantization parameter of the current encoding block based on the measurement value may include: adjusting the quantization parameter of the current encoding block based on an interval to which the corresponding measurement value belongs.

In a possible implementation of the present application, a quantization parameter of a sample with a corresponding measurement value within a certain range may not be adjusted, and a quantization parameter of a sample with a corresponding measurement value being too small may be reduced, while a quantization parameter of a sample with a corresponding measurement value being too large may be increased. At this time, a first measurement threshold and a second measurement threshold (the second measurement threshold is greater than the first measurement threshold) may be set according to the range. If the measurement value corresponding to the sample is greater than the first measurement threshold and less than the second measurement threshold, the quantization parameter of the sample may not be adjusted at this time. If the measurement value corresponding to the sample is less than the first measurement threshold, it means that the measurement value of the sample is too small, and the quantization parameter of the sample can be reduced by a first gradient adjustment value. If the measurement value corresponding to the sample is greater than the second measurement threshold, it means that the measurement value of the sample is too large, and the quantization parameter of the sample can be increased by a second gradient adjustment value at this time.

In a possible implementation of the present application, if the measurement values of the target samples in the current encoding block are all small or large, the quantization parameter of the current encoding block may not be adjusted at this time, then a third measurement threshold and a fourth measurement threshold can be set (the fourth measurement threshold is greater than the third measurement threshold). If the measurement values corresponding to the target samples in the current encoding block are all smaller than the third measurement threshold, it means that the measurement values of the target samples in the current encoding block are all small, and the quantization parameter of the current encoding block may not be adjusted at this time. If the measurement values corresponding to the target samples in the current encoding block are all greater than the fourth measurement threshold, it means that the measurement values of the target samples in the current encoding block are all large, and the quantization parameter of the current encoding block may not be adjusted at this time.

In the present embodiment, the current encoding block is divided into sub-blocks, and the measurement value corresponding to the target sample in the current encoding block is determined based on a sub-block division result; the quantization parameter of the current encoding block is adjusted based on the measurement value. Since the measurement value is calculated in advance, and then it is determined whether the quantization parameter of the sample needs to be adjusted and the adjustment range during the adjustment based on the measurement value, thus ensuring the rationality in the process of adjusting the quantization parameter.

Referring to Fig. 12, Fig. 12 is a schematic flowchart of a fifth embodiment of the quantization parameter adjustment method.

Based on the above fourth embodiment, the step S302 of the quantization parameter adjustment method of the present embodiment includes:
Step S302': adjusting the quantization parameter of the current encoding block based on the measurement value and the visual complexity information and/or the encoding complexity information.

It should be noted that when adjusting the quantization parameter of the current encoding block, in order to ensure as much as possible that the adjustment of the quantization parameter is reasonable, the quantization parameter of the current encoding block can also be adjusted based on the measurement value, the visual complexity information and/or the encoding complexity information.

In a possible implementation of the present application, when the visual complexity information of the current encoding block is within a certain range, quantization parameters of some of the samples with large measurement values can be increased or reduced. At this time, a first visual complexity interval and a fifth measurement threshold can be set in advance, and if the visual complexity information of the current encoding block is within the first visual complexity interval, a quantization parameter of a sample with a corresponding measurement value greater than the fifth measurement threshold can be increased or reduced by a first sub-block adjustment value, wherein the first sub-block adjustment value can be pre-set by a manager of the quantization parameter adjustment device.

For example, assuming that the visual complexity information is A1, the first visual complexity interval is less than 1, and the fifth measurement threshold is *para11,* then if A1 of the current encoding block is equal to 0, which is within the first visual complexity interval, a quantization parameter of a sample in the current encoding block with a corresponding sub-block measurement threshold greater than *para11* can be increased or reduced by the first sub-block adjustment value.

Wherein, the manager of the quantization parameter adjustment device can also set an adjustable range for the quantization parameter of the target sample in advance, and after increasing or reducing the quantization parameter based on the first sub-block adjustment value, detect whether the adjusted value is within the adjustable range, and if the adjusted value is not within the adjustable range, the quantization parameter will be corrected automatically to a range boundary value corresponding to the adjustable range, for example, assuming that the adjustable range is [min, max], the adjusted quantization parameter is Qc, and if Qc is greater than max, the quantization parameter will be modified to max, and if Qc is less than min, the quantization parameter will be modified to min.

In a possible implementation of the present application, the quantization parameters of some of the samples with small measurement values can be increased or reduced when the encoding complexity information of the current encoding block is within a certain range. At this time, a first encoding complexity interval and a sixth measurement threshold can be set in advance, and if the encoding complexity information is within the first encoding complexity interval, a quantization parameter of a sample with a corresponding measurement value less than the sixth measurement threshold is adjusted based on a second sub-block adjustment value. Wherein, adjusting the quantization parameter based on the second sub-block adjustment value may include: reducing or increasing the quantization parameter by the second sub-block adjustment value. Similarly, after the quantization parameter is adjusted based on the second sub-block adjustment value, it is also possible to detect whether the quantization parameter is within the adjustable range, which will not be described here.

In a possible implementation of the present application, the quantization parameters of some samples with small measurement values can be increased or reduced when both the encoding complexity information and the visual complexity information of the current encoding block are within a certain range. At this time, a second encoding complexity interval, a second visual complexity interval and a seventh measurement threshold can be set. If the encoding complexity information is within the second encoding complexity interval and the visual complexity information is within the second visual complexity interval, a quantization parameter of a sample with a corresponding measurement value less than the seventh measurement threshold, is adjusted based on a third sub-block adjustment value. Wherein, adjusting the quantization parameter based on the third sub-block adjustment value may include: reducing or increasing the quantization parameter by the third sub-block adjustment value. Similarly, after the quantization parameter is adjusted based on the third sub-block adjustment value, it is also possible to detect whether the quantization parameter is within the adjustable range, which is not described here.

In the present embodiment, the quantization parameter of the current encoding block is adjusted based on the measurement value and the visual complexity information and/or the encoding complexity information. In the process of adjusting the quantization parameter, whether the quantization parameter needs to be adjusted and how to adjust the quantization parameters is determined based on the measurement value combined with the visual complexity information and/or the encoding complexity information, which ensures the flexibility and rationality of adjusting the quantization parameter.

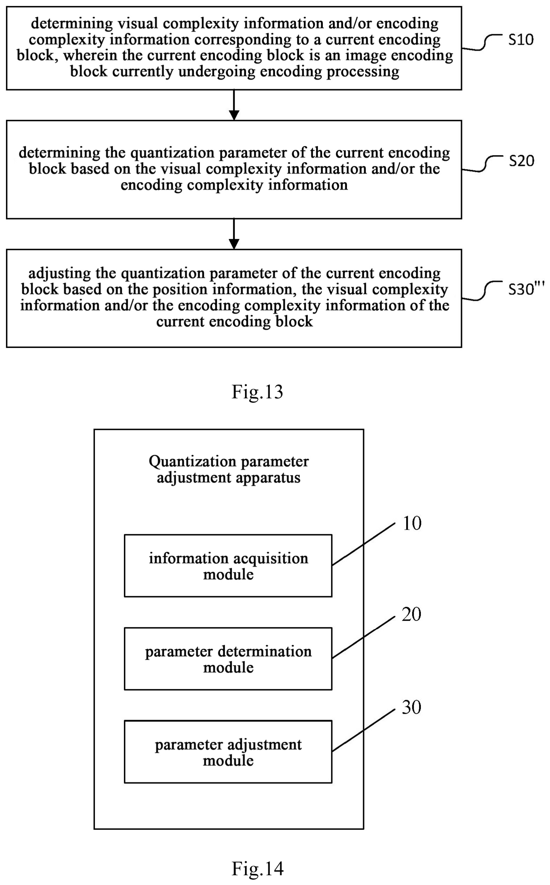

Referring to Fig. 13, Fig. 13 is a schematic flowchart of a sixth embodiment of the quantization parameter adjustment method.

Based on the above first embodiment, the step S30 of the quantization parameter adjustment method of the present embodiment includes:
Step S30‴: adjusting the quantization parameter of the current encoding block based on position information, the visual complexity information and/or the encoding complexity information of the current encoding block.

It should be noted that in order to adjust the quantization parameters reasonably, when adjusting the quantization parameter of the current encoding block, the quantization parameter can be adjusted comprehensively in combination with the position information, the visual complexity information and the encoding complexity information of the current encoding block.

In a possible implementation of the present application, the quantization parameter of the current encoding block can be appropriately reduced when the current encoding block is at a specific position and the visual complexity is low. At this time, a preset designated position and a preset visual complexity threshold can be set in advance, and if the current encoding block is at the preset designated position and the visual complexity information is less than the preset visual complexity threshold, the quantization parameter of the current encoding block can be reduced by a first adjustment value. Wherein, the preset designated position, the preset visual complexity threshold and the first adjustment value can all be set in advance by the manager of the quantization parameter adjustment device. For example, the preset designated position is set to the first row or first column of the slice, the preset visual complexity threshold is set to 1, and the first adjustment value is set to 2.

In a possible implementation of the present application, the quantization parameter of the current encoding block can be appropriately reduced when the current encoding block is at a specific position and the encoding complexity is low. At this time, a preset designated position and a preset encoding complexity threshold can be set in advance, and if the current encoding block is at the preset designated position and the encoding complexity information is less than the preset encoding complexity threshold, the quantization parameter of the current encoding block can be reduced by a second adjustment value. Wherein, the preset designated position, the preset encoding complexity threshold and the second adjustment value can all be set in advance by the manager of the quantization parameter adjustment device.

In a possible implementation of the present application, the quantization parameter of the current encoding block can be appropriately reduced when the current encoding block is at a specific position and both the visual complexity and the encoding complexity are low. At this time, a preset designated position, a preset visual complexity threshold and a preset encoding complexity threshold can be set in advance. If the current encoding block is at the preset designated position, the visual complexity information is less than the preset visual complexity threshold and the encoding complexity information is less than the preset encoding complexity threshold, the quantization parameter of the current encoding block can be reduced by a third adjustment value. Wherein, the preset designated position, the preset visual complexity threshold, the preset encoding complexity threshold and the third adjustment value can all be set in advance by the manager of the quantization parameter adjustment device.

In a possible implementation of the present application, the quantization parameter of the current encoding block can be appropriately reduced when the current encoding block is not at a specific position and both the visual complexity and the encoding complexity are low. At this time, a preset designated position, a preset visual complexity threshold and a preset encoding complexity threshold can be set in advance. If the current encoding block is not at the preset designated position, the visual complexity information is less than the preset visual complexity threshold and the encoding complexity information is less than the preset encoding complexity threshold, the quantization parameter of the current encoding block can be reduced by a fourth adjustment value. Wherein, the preset designated position, the preset visual complexity threshold, the preset encoding complexity threshold and the fourth adjustment value can all be set in advance by the manager of the quantization parameter adjustment device.

In a possible implementation of the present application, the methods of at least two of the above-mentioned various embodiments of the quantization parameter adjustment method can be randomly combined to obtain a new embodiment, which is not limited in the present application.

In the present embodiment, the quantization parameter of the current encoding block is adjusted based on the position information, the visual complexity information and/or the encoding complexity information of the current encoding block. As the quantization parameter of the current encoding block is adjusted by combining the position information, the visual complexity information and/or the encoding complexity information of the current encoding block, it is ensured that when the quantization parameter is adjusted, an adjustment strategy of the quantization parameter can be set from a plurality of different dimensions, so that the adjustment of the quantization parameters is more in line with the actual situation, thus improving the rationality of the adjustment of the quantization parameter.

In addition, an embodiment of the present application also provides a storage medium having a quantization parameter adjustment program stored therein, which, when executed by a processor, cause the processor to implement the steps of the quantization parameter adjustment method described above.

Referring to Fig. 14, Fig. 14 is a structural block diagram of the first embodiment of the quantization parameter adjustment apparatus of the present application.

As shown in Fig. 14, the quantization parameter adjustment apparatus proposed in the embodiment of the present application includes:
an information acquisition module 10, configured for determining visual complexity information and/or encoding complexity information corresponding to a current encoding block;
a parameter determination module 20, configured for determining a quantization parameter of the current encoding block based on the visual complexity information and/or the encoding complexity information;
a parameter adjustment module 30, configured for adjusting the quantization parameter of the current encoding block.

In the present embodiment, through determining visual complexity information and/or encoding complexity information corresponding to the current encoding block, wherein the current encoding block is an image encoding block currently undergoing encoding processing; determining the quantization parameter of the current encoding block according to the visual complexity information and/or the encoding complexity information; and adjusting the quantization parameter of the current encoding block. Because the quantization parameter of the current encoding block can be determined based on the visual complexity information and/or encoding complexity information of the current encoding block, and the quantization parameter of the current encoding block can be adjusted, it is ensured that the quantization parameter can be dynamically adjusted along as the content of the current encoding block is encoded, thus avoiding subjective quality loss.

In a possible implementation of the present application, the parameter adjustment module 30 is further configured for adjusting the quantization parameter of the current encoding block based on a parameter threshold.

In a possible implementation of the present application, the parameter adjustment module 30 is further configured for setting the quantization parameter as a preset quantization parameter if the quantization parameter is greater than a first parameter threshold and less than a second parameter threshold; or, not adjusting the quantization parameter of the current encoding block if the quantization parameter is less than the first parameter threshold or greater than the second parameter threshold; or, setting the quantization parameter to a third parameter threshold or reducing the quantization parameter if the quantization parameter is less than the third parameter threshold, wherein the first parameter threshold is less than the third parameter threshold, and the third parameter threshold is less than the second parameter threshold.

In a possible implementation of the present application, the parameter adjustment module 30 is further configured for adjusting the quantization parameter of the current encoding block based on the visual complexity information and/or the encoding complexity information and a complexity threshold.

In a possible implementation of the present application, the parameter adjustment module 30 is further configured for not adjusting the quantization parameter of the current encoding block if the visual complexity information or the encoding complexity information is less than a first complexity threshold; or, not adjusting the quantization parameter of the current encoding block if the visual complexity information is less than a second complexity threshold and the encoding complexity information is greater than a third complexity threshold, wherein the second complexity threshold is less than the third complexity threshold.

In a possible implementation of the present application, the parameter adjustment module 30 is further configured for reducing the quantization parameter of the current encoding block if the visual complexity information is equal to a fourth complexity threshold; or, increasing the quantization parameter of the current encoding block if the visual complexity information is greater than a fifth complexity threshold and the encoding complexity information is greater than a sixth complexity threshold, wherein the fourth complexity threshold is less than the fifth complexity threshold; or, reducing the quantization parameter of the current encoding block if the visual complexity information is less than a seventh complexity threshold and the encoding complexity information is less than an eighth complexity threshold, wherein the fourth complexity threshold is greater than the seventh complexity threshold, the fifth complexity threshold is greater than the seventh complexity threshold, and the sixth complexity threshold is greater than the eighth complexity threshold.

In a possible implementation of the present application, the parameter adjustment module 30 is further configured for reducing or increasing the quantization parameter of the current encoding block if the current encoding block is at a preset designated position; or, not adjusting the quantization parameter of the current encoding block if the current encoding block is at the preset designated position.

In a possible implementation of the present application, the parameter adjustment module 30 is further configured for determining a measurement value of a target sample in the current encoding block; adjusting the quantization parameter of the current encoding block based on the measurement value.

In a possible implementation of the present application, the parameter adjustment module 30 is further configured for calculating the measurement value of the target sample in the current encoding block based on reconstructed samples around the current encoding block.

In a possible implementation of the present application, the parameter adjustment module 30 is further configured for determining positions of the reconstructed samples corresponding to the target sample in the current encoding block based on a prediction mode of the target sample; and determining the measurement value of the target sample in the current encoding block based on the positions of the reconstructed samples.

In a possible implementation of the present application, the parameter adjustment module 30 is further configured for performing a sub-block division on the current encoding block, and dividing the current encoding block into a plurality of samples according to a sub-block division result, wherein samples belonging to a same sub-block have a same measurement value.

In a possible implementation of the present application, the parameter adjustment module 30 is further configured for reducing a quantization parameter of a sample with a corresponding measurement value less than a first measurement threshold by a first gradient adjustment value; or, increasing a quantization parameter of a sample with a corresponding measurement value greater than a second measurement threshold by a second gradient adjustment value; or, not adjusting a quantization parameter of a sample with a corresponding measurement value greater than the first measurement threshold and less than the second measurement threshold, wherein the second measurement threshold is greater than the first measurement threshold.

In a possible embodiment of the present application, the parameter adjustment module 30 is further configured for not adjusting the quantization parameter of the current encoding block if measurement values corresponding to target samples are all less than a third measurement threshold; or, not adjusting the quantization parameter of the current encoding block if measurement values corresponding to target samples are all greater than a fourth measurement threshold, wherein the fourth measurement threshold is greater than the third measurement threshold.

In a possible implementation of the present application, the parameter adjustment module 30 is further configured for adjusting the quantization parameter of the current encoding block based on the measurement value and the visual complexity information and/or the encoding complexity information.

In a possible implementation of the present application, the parameter adjustment module 30 is further configured for increasing or reducing a quantization parameter of a sample with a corresponding measurement value greater than a fifth measurement threshold by a first sub-block adjustment value if the visual complexity information is within a first visual complexity interval; or, adjusting a quantization parameter of a sample with a corresponding measurement value less than a sixth measurement threshold based on a second sub-block adjustment value if the encoding complexity information is within the first encoding complexity interval; or, adjusting a quantization parameter of a sample with a corresponding measurement value less than a seventh measurement threshold based on a third sub-block adjustment value if the encoding complexity information is within a second encoding complexity interval and the visual complexity information is within a second visual complexity interval.

In a possible implementation of the present application, the parameter adjustment module 30 is further configured for reducing the quantization parameter of the current encoding block by a first adjustment value if the current encoding block is at a preset designated position and the visual complexity information is less than a preset visual complexity threshold; or, reducing the quantization parameter of the current encoding block by a second adjustment value if the current encoding block is at the preset designated position and the encoding complexity information is less than a preset encoding complexity threshold; or, reducing the quantization parameter of the current encoding block by a third adjustment value if the current encoding block is at the preset designated position, the visual complexity information is less than the preset visual complexity threshold, and the encoding complexity information is less than the preset encoding complexity threshold; or, reducing the quantization parameter of the current encoding block by a fourth adjustment value if the current encoding block is not at the preset designated position, the visual complexity information is less than the preset visual complexity threshold, and the encoding complexity information is less than the preset encoding complexity threshold.

In a possible implementation of the present application, the parameter adjustment module 30 is further configured for adjusting quantization parameters of all regions in the current encoding block; or, adjusting a quantization parameter of a preset region in the current encoding block; or, not adjusting any of the quantization parameters of all regions in the current encoding block.

In a possible implementation of the present application, at least one of the parameter thresholds, the complexity thresholds, the preset designated position and the measurement thresholds is a preset value, or a value read from a high-level syntax, the high-level syntax includes a sequence level, an image level or a slice level.

In a possible implementation of the present application, the parameter adjustment module 30 is further configured for updating a rate control parameter based on the adjusted quantization parameter, and the rate control parameter is configured for calculating the quantization parameter of the encoding block.

It should be understood that the above is only an example, and it does not constitute any limitation on the technical solution of the present application. In specific applications, those skilled in the art can make settings as needed, and the present application does not limit this.

It should be noted that the workflow described above is merely illustrative and does not limit the scope of protection of the present application. In practical application, those skilled in the art can choose some or all of them to achieve the purpose of the present embodiment scheme according to actual needs, and there is no limitation here.

In addition, for technical details that are not described in detail in the present embodiment, please refer to the quantization parameter adjustment method provided by any embodiment of the present application, and they will not be repeated here.

In addition, it should be noted that in this paper, the terms "including", "containing" or any other variation thereof are intended to cover non-exclusive inclusion, so that a process, method, article or system including a series of elements includes not only those elements, but also other elements not explicitly listed, or also includes elements inherent to such process, method, article or system. Without more restrictions, an element defined by the phrase "including a" does not exclude the existence of other identical elements in the process, method, article or system that includes the element.

The above serial numbers of the embodiments of the present application are only for description, and do not represent the advantages and disadvantages of the embodiments.

Through the description of the above embodiments, those skilled in the art can clearly understand that the methods of the above embodiments can be realized by means of software and necessary general hardware platform, and of course they can also be realized by hardware, but in many cases, the former is the better embodiment. Based on this understanding, the technical solution of the present application can essentially or the part that contributes to the prior art can be embodied in the form of a software product, which is stored in a storage medium (such as Read Only Memory (ROM)/RAM, magnetic disk, optical disk, etc.) and includes several instructions to make a terminal device (which can be a mobile phone, a computer, a server, or a network device, etc.) execute the methods described in various embodiments of the present application.

The above is only an optional embodiment of the present application, which does not limit the patent scope of the present application. Any equivalent structure or equivalent process transformation made by using the contents of the present application specification and drawings, or directly or indirectly applied to other related technical fields, are equally included in the patent protection scope of the present application.

## Claims

1. A quantization parameter adjustment method, comprising:
determining encoding complexity information corresponding to a current encoding block, wherein the current encoding block is an image encoding block currently undergoing encoding processing;
determining a quantization parameter of the current encoding block based on the encoding complexity information; and
adjusting the quantization parameter of the current encoding block.

2. The quantization parameter adjustment method according to claim 1, wherein adjusting the quantization parameter of the current encoding block comprises:
adjusting the quantization parameter of the current encoding block based on a parameter threshold.

3. The quantization parameter adjustment method according to claim 2, wherein adjusting the quantization parameter of the current encoding block based on the parameter threshold comprises:
in response to determining that the quantization parameter is less than a first parameter threshold or greater than a second parameter threshold, not adjusting the quantization parameter of the current encoding block.

4. The quantization parameter adjustment method according to claim 1, wherein adjusting the quantization parameter of the current encoding block comprises:
adjusting the quantization parameter of the current encoding block based on the encoding complexity information and a complexity threshold.

5. The quantization parameter adjustment method according to claim 1, wherein adjusting the quantization parameter of the current encoding block comprises:
determining a measurement value of a target sample in the current encoding block; and
adjusting the quantization parameter of the current encoding block based on the measurement value.

6. The quantization parameter adjustment method according to any one of claims 1-5, wherein adjusting the quantization parameter of the current encoding block comprises:
not adjusting any of quantization parameters of all regions in the current encoding block.

7. The quantization parameter adjustment method according to any one of claims 2-5, wherein at least one of the parameter threshold and the complexity threshold is a preset value or a value read from a high-level syntax, the high-level syntax comprises an image level.

8. A quantization parameter adjustment method, comprising:
determining encoding complexity information corresponding to a current encoding block, wherein the current encoding block is an image encoding block currently undergoing encoding processing;
determining a quantization parameter of the current encoding block based on the encoding complexity information;
determining a measurement value of a target sample in the current encoding block; and
adjusting the quantization parameter of the current encoding block based on the measurement value.

9. The quantization parameter adjustment method according to claim 8, wherein determining the measurement value of the target sample in the current encoding block comprises:
calculating the measurement value of the target sample in the current coding block based on reconstructed samples around the current encoding block.

10. The quantization parameter adjustment method according to claim 9, wherein calculating the measurement value of the target sample in the current encoding block based on the reconstructed samples around the current encoding block comprises:
determining positions of reconstructed samples corresponding to the target sample in the current encoding block based on a prediction mode of the target sample; and
determining the measurement value of the target sample in the current encoding block based on the positions of the reconstructed samples.

11. The quantization parameter adjustment method according to claim 8, wherein before determining the measurement value of the target sample in the current encoding block, the method further comprises:
performing a sub-block division on the current encoding block, and dividing the current encoding block into a plurality of samples based on a sub-block division result, wherein samples belonging to a same sub-block have a same measurement value.

12. The quantization parameter adjustment method according to claim 8, wherein adjusting the quantization parameter of the current encoding block based on the measurement value comprises:
reducing a quantization parameter of a sample with a corresponding measurement value less than a first measurement threshold, by a first gradient adjustment value.

13. The quantization parameter adjustment method according to claim 8, wherein adjusting the quantization parameter of the current encoding block based on the measurement value comprises:
adjusting the quantization parameter of the current encoding block based on the measurement value and the encoding complexity information.

14. The quantization parameter adjustment method according to claim 13, wherein adjusting the quantization parameter of the current encoding block based on the measurement value and the encoding complexity information comprises:
in response to determining that the encoding complexity information is within a first encoding complexity interval, adjusting, based on a second sub-block adjustment value, a quantization parameter of a sample with a corresponding measurement value less than a sixth measurement threshold.

15. The quantization parameter adjustment method according to any one of claims 8-14, wherein adjusting the quantization parameter of the current encoding block based on the measurement value comprises:
determining a region to be adjusted in the current encoding block based on local indication information; and
adjusting a quantization parameter of the region to be adjusted in the current encoding block based on the measurement value.

16. The quantization parameter adjustment method according to any one of claims 9-14, wherein the measurement threshold is a preset value or a value read from a high-level syntax, the high-level syntax comprises an image level.

17. A quantization parameter adjustment apparatus, comprising:
an information acquisition module, configured for determining encoding complexity information corresponding to a current encoding block, wherein the current encoding block is an image encoding block currently undergoing encoding processing;
a parameter determination module, configured for determining a quantization parameter of the current encoding block based on the encoding complexity information; and
a parameter adjustment module, configured for adjusting the quantization parameter of the current encoding block.

18. A quantization parameter adjustment apparatus, comprising:
an information acquisition module, configured for determining encoding complexity information corresponding to a current encoding block, wherein the current encoding block is an image encoding block currently undergoing encoding processing;
a parameter determination module, configured for determining a quantization parameter of the current encoding block based on the encoding complexity information; and
a parameter adjusting module, configured for determining a measurement value of a target sample in the current encoding block, and adjusting the quantization parameter of the current encoding block based on the measurement value.

19. A quantization parameter adjustment device, comprising: a memory, a processor, and a quantization parameter adjustment program stored in the memory and configured to run on the processor, and the quantization parameter adjustment program is configured to implement the quantization parameter adjustment method according to any one of claims 1 to 16.

20. An encoding device, comprising: a memory, a processor and an encoding program stored in the memory and configured to run on the processor, and the encoding program is configured to implement the quantization parameter adjustment method according to any one of claims 1 to 16.

21. A decoding device, comprising: a memory, a processor and a decoding program stored in the memory and configured to run on the processor, and the decoding program is configured to implement the quantization parameter adjustment method according to any one of claims 1 to 16.

22. A storage medium having a quantization parameter adjustment program stored therein, which, when executed by a processor, cause the processor to implement the quantization parameter adjustment method according to any one of claims 1 to 16.
